# EUROPÄISCHE PATENTSCHRIFT

(11) **EP 3 869 786 B1**
(45) Veröffentlichungstag und Bekanntmachung des Hinweises auf die Patenterteilung: **17.01.2024**
(21) Anmeldenummer: 20159011.4
(22) Anmeldetag: 24.02.2020
(51) Int. Cl.: H04N 7/18, H04N 23/698

(54) **VORRICHTUNG ZUM ERMITTELN VON DATEN FÜR EIN STRASSENZUGPANORAMABILD UND VERFAHREN HIERZU**
DEVICE FOR DETERMINING DATA FOR A ROAD PANORAMA IMAGE AND METHOD FOR SAME
DISPOSITIF DE DÉTERMINATION DES DONNÉES POUR UNE IMAGE PANORAMIQUE DE LA RUE ENTIÈRE ET PROCÉDÉ ASSOCIÉ

(43) Veröffentlichungstag der Anmeldung: 25.08.2021
(73) Patentinhaber: Parkling GmbH, 10178 Berlin (DE)
(72) Erfinder: FRETTER, Christoph, 12435 Berlin (DE); HASHIMOTO, Mark, 10823 Berlin (DE)
(74) Vertreter: Wunderlich & Heim Patentanwälte Partnerschaftsgesellschaft mbB

(56) Entgegenhaltungen:
- WO-A2-01/61985
- US-B1- 8 678 680
- BROGGI ALBERTO ET AL: "Extensive Tests of Autonomous Driving Technologies", IEEE TRANSACTIONS ON INTELLIGENT TRANSPORTATION SYSTEMS, IEEE, PISCATAWAY, NJ, USA, Bd. 14, Nr. 3, 1. September 2013 (2013-09-01), Seiten 1403-1415, XP011525557, ISSN: 1524-9050, DOI: 10.1109/TITS.2013.2262331 [gefunden am 2013-08-29]
- Anonymous: "Point Grey Camera Selector Tool", , 21. Juni 2012 (2012-06-21), Seiten 1/2-2/2, XP055721688, Gefunden im Internet: URL:https://web.archive.org/web/2012062103 4047/http://www.ptgrey.com/camera_selector /Default.aspx [gefunden am 2020-08-11]
- Anomymus: "Grasshopper Express", , 9 June 2012 (2012-06-09), pages 1-1, XP093026474, Retrieved from the Internet: URL:https://web.archive.org/web/2012060906 1303if_/http://www.ptgrey.com/products/gra sshopper_express/Datasheet_GrasshopperExpr ess.pdf [retrieved on 2023-02-23]
- Brawleyl William: "Sony A7S Review - Field Test Part II", , 27 October 2014 (2014-10-27), pages 1-23, XP093026561, Retrieved from the Internet: URL:https://www.imaging-resource.com/PRODS /sony-a7s/sony-a7s-field-test-part-ii.htm [retrieved on 2023-02-23]

## Beschreibung

Die Erfindung betrifft eine Vorrichtung zum Ermitteln von Daten für ein Straßenzugpanoramabild mit einer Kamera und mit einer Befestigungseinrichtung zum Anbringen der Kamera in oder an einem Fahrzeug. Hierbei ist die Kamera an der Befestigungseinrichtung fixiert und mittels der Befestigungseinrichtung in oder am Fahrzeug positionierbar, um zumindest Bilddaten in einem 90°-Winkel zu einer Bewegungsrichtung des Fahrzeuges aufzunehmen, wenn das Fahrzeug in Bewegung ist.

Ferner betrifft die Erfindung ein Fahrzeug sowie ein Verfahren zum Ermitteln von Daten für ein Straßenzugpanoramabild mit einem Fahrzeug.

Durch die Zunahme der Bevölkerung in städtischen Gebieten nimmt der Verkehr, insbesondere auch der Individualverkehr mit Pkws, zu. Gerade im innerstädtischen Bereich führt diese massive Zunahme der Verkehrsdichte zu Problemen, die einen Mangel an Platzangebot zur Folge haben, der nicht mehr mit einfachen Mitteln gelöst werden kann. Weitere Probleme sind die damit einhergehende Lärmbelästigung durch den Verkehr aber auch die mittlerweile immer kritischer gesehene Belastung durch Schadstoffe.

Studien haben gezeigt, dass ca. 30% des innerstädtischen Verkehrs kein klassischer Beförderungsverkehr ist, sondern auf Fahrzeuge zurückzuführen ist, die auf Parkplatzsuche sind.

Hochrechnungen auf Deutschland ergeben, dass hierbei 1,9 Milliarden Stunden für die Parkplatzsuche aufgewendet werden. Hierbei werden 3,2 Milliarden Liter Treibstoff verbraucht. Insgesamt geht man von einem volkswirtschaftlichen Verlust in Höhe von 40,4 Milliarden EUR aus.

Der Wunsch nach einem Parkraummanagement, der diesen Verkehr zur Parkplatzsuche reduziert, ist daher in zunehmendem Maße gegeben.

Bei derartigen Systemen wird grundsätzlich von zwei Zuständen der Datenermittlung unterscheiden. Zum einen müssten statische Daten beschafft werden, aus denen hervorgeht, wo Parkplätze sind, zu welchen Zeiten man an diesen Parkplätzen parken darf, aber auch Informationen, wie die Parkplätze zu beparken sind, beispielsweise als Längsparker oder Querparker. Dies beinhaltet auch Informationen über Parkverbotszonen sowie eventuelle Preise für das Parken. Derartige Daten werden als statische Daten bezeichnet und stellen die Grundvoraussetzung für ein Parkraummanagement dar.

Der zweite Zustand der Datenermittlung ist das Ermitteln von sogenannten dynamischen Daten, welche Informationen über die aktuelle Parkplatzbelegungssituation darstellen.

Eine Möglichkeit, um statische Daten zu ermitteln ist beispielsweise aus der DE 10 2018 214 510 A1 bekannt. Hierbei können jedoch nur Informationen zum Vorhandensein eines Parkplatzes oder nicht ermittelt werden. Daten, zu welchen Zeiten das Parken erlaubt ist oder ob es sich beispielsweise um eine Einfahrt handelt, können nur schwer festgestellt werden.

Einerseits ist es beispielsweise aus Google Street View bekannt, mittels Fahrzeugen georeferenzierte Rundum - also 360°-Bilder - von verschiedenen Positionen in einer Straße zu erzeugen. Allerdings reichen derartige Daten nicht aus, um ausreichend Informationen zu generieren, welche zum Berechnen von statischen Parkplatzdaten notwendig sind. Beispielsweise können die Positionen von einzelnen gestatteten Parkplätzen gar nicht oder nur schwer ermittelt werden. In ähnlicher Weise sind oft auch Daten zu erlaubten Parkzeiten und dergleichen nicht sichtbar.

BROOGI ALBERTO ET AL: "Extensive Tests of Autonomous Driving Technolgies" IEE TRANACTIONS ON INTELLIGENT TRANSPORTATION SYSTEMS, IEEE, PISCATAWAY, NJ, USA, Bd. 14, Nr. 3, 1. September 2013 (20113-09-01), Seiten 1403-1415, XPO11525557, ISSN: 1524-9050, DOI: 10, 1109/TITS, 2013, 2262331 betrifft ein Fahrzeug, an dem verschiedene Kameras eingebaut sind, die ein autonomes Fahren ermöglichen sollen.

Der Erfindung liegt daher die **Aufgabe** zugrunde, eine Vorrichtung und ein Verfahren zum Ermitteln von Daten für ein Straßenzugpanoramabild anzugeben, welche effizient und leicht zu generieren sind und eine ausreichend hohe Datenqualität liefern. Diese Aufgabe wird erfindungsgemäß durch eine Vorrichtung mit den Merkmalen des Anspruchs 1, ein Fahrzeug mit den Merkmalen des Anspruchs 10 sowie ein Verfahren mit den Merkmalen des Anspruchs 11 gelöst.

Vorteilhafte Ausführungsformen der Erfindung sind in den Unteransprüchen, in der Beschreibung sowie in den Figuren und deren Erläuterung angegeben.

Gemäß der erfindungsgemäßen Vorrichtung ist vorgesehen, dass die Kamera ausgebildet ist, einen kontinuierlichen Film mit einer Auflösung von mehr als 1.920 Pixel auf 1.080 Pixel pro Frame aufzunehmen.

Der Erfindung liegen mehrere Grundgedanken zugrunde, zum einen wurde erkannt, dass es gerade im Hinblick auf an Straßen vorhandene grafische Informationen notwendig ist, Bilder eines Straßenzuges aufzunehmen, anstelle mögliche Parkplätze mit Ultraschall oder LIDAR-Sensoren abzutasten.

Zum anderen wurde entsprechend der Erfindung erkannt, dass es auch nicht ausreichend ist, einzelne Bilder des Straßenzuges, beispielsweise alle 5 Meter oder alle 10 Meter anzufertigen. Derartige Bilder reichen nicht aus, um die notwendige Genauigkeit für eine spätere Verarbeitung als statische Parkplatzdaten zu gewährleisten. Daher wird entsprechend der Erfindung vorgeschlagen, einen kontinuierlichen Film mit der Kamera aufzunehmen. Anders ausgedrückt wird ein Film des Straßenzuges während des Fahrens erstellt.

Eine weitere Erkenntnis, die der Erfindung zugrunde liegt ist, dass selbst bisherige Standard-HD-Auflösungen nicht geeignet sind, um eine ausreichend gute Detailgenauigkeit zu erreichen, so dass beispielsweise Parkplatzbeschilderungen in 5 bis 10 Metern ausreichend detailliert für eine spätere Auswertung erkannt werden können. Daher wird entsprechend der Erfindung die Kamera mit einer höheren Auflösung als HD, bevorzugt 4K UHD, das heißt im Bereich von 3.840 Pixel auf 2.160 Pixel betrieben.

Ferner ist es entsprechend der Erfindung wesentlich, dass beim Aufnehmen der Daten ein Teil des aufgenommenen Films Bilddaten enthält, welche genau im 90°-Winkel zur Bewegungsachse des Fahrzeuges beziehungsweise zur Hauptfahrtrichtung des Fahrzeuges aufgenommen werden. Derartige Daten sind erforderlich, um eine möglichst effiziente und einfache Berechnung des zu erstellenden Straßenzugpanoramabildes zu gestatten.

Vorteilhaft ist es, wenn die Befestigungseinrichtung im Innenraum des Fahrzeuges vorgesehen ist. Um die Befestigungseinrichtung möglichst stabil und fest mit dem Fahrzeug zu verbinden, kann diese mittels Isofix-Befestigungen und/oder einer Kopfstütze auf einem Sitz des Fahrzeuges befestigbar sein. Auf diese Weise kann die Befestigungseinrichtung beispielsweise auf die Rücksitzbank eines Autos fixiert werden. Grundsätzlich ist es aber auch möglich, die Befestigungseinrichtung an mehreren Stellen, beispielsweise im Kofferraum, vorzusehen, sofern ein Kombi verwendet wird. Wesentlich ist es hierbei, dass es einer auf der Befestigungseinrichtung fixierten Kamera möglich ist, im 90°-Winkel zur Bewegungsrichtung aus dem Fahrzeug zu filmen.

Vorteilhaft ist es ferner, wenn die Befestigungseinrichtung einen Kameraarm aufweist, an dem die Kamera fixierbar ist. Dieser Kameraarm ist bevorzugt schwenkbar ausgebildet. Grundsätzlich sind die meisten Parkplätze in Europa an einer Straße auf der rechten Seite. In Einbahnstraßen kann jedoch sowohl rechts als auch links in Fahrtrichtung geparkt werden. Um auch statische Daten, das heißt, den erfindungsgemäßen Film für derartige Einbahnstraßen zu erzeugen, ist die Befestigungseinrichtung mit dem Kameraarm ausgebildet, welcher für seine exakte Positionierung horizontal schwenkbar ausgebildet ist. Hierdurch kann die Befestigungseinrichtung so im Fahrzeug platziert werden, dass der kontinuierliche Film auch auf beiden Seiten, der linken als auch der rechten Seite in Fahrtrichtung erzeugt werden kann.

In diesem Zusammenhang kann der Kameraarm wippenartig mit zwei an entfernt liegenden Ende ausgebildeten Befestigungspunkten für die Kamera ausgeführt sein. Eine derartige Ausführung erleichtert den Umbau der Befestigungseinrichtung von einer Seite zur anderen Seite des Fahrzeuges.

Anders ausgedrückt kann die Befestigungseinrichtung so ausgeführt sein, dass sie auf die Rücksitzbank eines Fahrzeuges montiert werden kann. Zur besseren Fixierung der Befestigungseinrichtung können hierbei die in den meisten Autos vorhandenen Isofix-Fixierungen als auch Befestigungspunkte an der Kopfstütze verwendet werden. Die Kamera wird dann auf dem Kameraarm befestigt, so dass sie sich möglichst nahe am seitlichen Fenster befindet. Will man nun aus der anderen Seite des Autos filmen, wird die Befestigungseinrichtung auf der anderen Seite des Autos platziert und die Kamera von einem Ende des Kameraarms auf das andere Ende des Kameraarms gewechselt. Auch hier findet die Platzierung so statt, dass die Kamera möglichst nah am Fenster fixiert wird.

Grundsätzlich kann die Kamera im fixierten Zustand der Befestigungseinrichtung in jeder beliebigen Höhe zum Straßenniveau montiert sein. Besonders gute Ergebnisse zum Erkennen der statischen Daten und um die spätere Berechnung der Daten zu erleichtern ergeben sich, wenn die Kamera bezüglich des Straßenniveaus auf 1,0 Metern bis zu 1,8 Metern Höhe, vorteilhaft zwischen 1,0 Meter und 1,5 Meter, bevorzugt um 1,2 Meter montiert ist. Diese Größenangaben gelten jeweils für den Fall, dass die Befestigungseinrichtung im oder am Fahrzeug angebracht ist. Ein Film auf der Höhe von ca. 1,2 Metern ergibt mit den auf dem Markt verfügbaren Kameras einen ausreichenden Erfassungsbereich der Kamera, so dass auch nahe der Straße platzierte Schilder erkannt werden können.

Grundsätzlich können die Kamera und die Befestigungseinrichtung beliebig ausgeführt sein. Bevorzugt ist es jedoch, wenn die beiden in Kombination so ausgeführt sind, dass die Kamera im fixierten Zustand an der Befestigungseinrichtung zum Erstellen des kontinuierlichen Films im Hochformat betrieben werden kann. Gängige Kameras weisen meist ein Aufnahmeformat im Verhältnis 4:3 beziehungsweise 16:9 oder 10 auf. Durch das Vorsehen der Kameraposition zum Filmen im Hochformat wird es wiederum erleichtert, nahe an der Kamera und somit tendenziell hohen Schilder komplett aufzunehmen. So steigt insbesondere auch der Informationsgehalt der Bilder des Films. Zusätzlich wird hierdurch auch die Menge der ermittelten Bilddaten vergrößert, da, wenn sich das Fahrzeug auf der Straße bewegt, ein kontinuierlicher Scan beziehungsweise eine ausreichende Aufnahme in der Richtung quer zum Hochformat der Fahrtrichtung angefertigt wird.

Ferner können die Kamera und die Befestigungseinrichtung im fixierten Zustand der Kamera ausgebildet sein, um Aufnahmen des kontinuierlichen Films mit einem Erfassungswinkel von mindestens 90° in der Vertikalen und/oder mindestens 50° in der Horizontalen zu erhalten. Anders ausgedrückt wird ein Weitwinkelobjektiv verwendet, welches mindestens die zuvor genannten Erfassungswinkel aufweist. So wird sichergestellt, dass alle relevanten Daten auf dem erzeugten Film vorhanden sind. Das heißt, dass nahe an der Straße platzierte Schilder aber auch entfernt platzierte Schilder mit ausreichender Genauigkeit aufgenommen werden können.

Um die nachträgliche Verarbeitung zu erleichtern ist es bevorzugt, wenn die Kamera und die Befestigungseinrichtung im fixierten Zustand der Kamera zur Aufnahme des kontinuierlichen Films mit einem Erfassungswinkel von mindestens 45° horizontal in Fahrtrichtung des Fahrzeuges und mindestens 5° horizontal gegen die Fahrtrichtung des Fahrzeuges ausgelegt sind. Der horizontale Erfassungswinkel von mindestens 50° setzt sich so aus 45° der Senkrechten zur Fahrtrichtung in Fahrtrichtung ausgerichtet und mindestens 5° entgegen der Fahrtrichtung zusammen. Eine derartige Aufteilung erleichtert die spätere Auswertung, da sich das Fahrzeug während der Aufnahme in Fahrtrichtung bewegt.

Das Straßenzugpanoramabild wird durch ein entsprechendes Aneinanderreihen der durch den kontinuierlichen Film erzeugten Bilder erzeugt, wobei jeweils eine optimale Auswahl getätigt wird, wobei nur Bildausschnitte des kontinuierlichen Films verwendet werden.

Grundsätzlich können beliebige Kameras eingesetzt werden. Als vorteilhaft hat es sich herausgestellt, wenn die Kamera mindestens mit einer Verschlusszeit von 1:3.000 Sekunden, insbesondere 1:4.000 Sekunden und/oder eine Lichtempfindlichkeit von mindestens ISO 20.000, bevorzugt ISO 51.200 und/oder mit einer Blende von mindestens 4, bevorzugt 5,6 betreibbar ist.

Eine solche Auswahl ergibt sich aus dem Wunsch, auch beispielsweise nachmittags im Winter in Nordeuropa Daten aufzuzeichnen, welche zur Erstellung eines Straßenzugpanoramabildes verwendet werden können. Hierbei ist zu berücksichtigen, dass zum einen durch die gewählte Blende ein möglichst großer Bereich der Aufnahme scharf ist, so dass die Daten entsprechend ausgewertet werden können. Hierbei wird die Blende bevorzugt so eingestellt, dass von 2 Meter Entfernung, bevorzugt 1,5 Meter Entfernung bis Unendlich im Rahmen einer hyperfokalen Entfernung, die Aufnahme scharf ist. Grundsätzlich ist eine möglichst kurze Belichtungszeit wünschenswert, um scharfe Aufnahmen zu erzeugen. Es ist zu berücksichtigen, dass sich das Fahrzeug beim Erstellen des kontinuierlichen Films mit einer Geschwindigkeit im Stadtverkehr von durchschnittlich 40 km/h bis zu 50 oder 60 km/h bewegt. Die gewählte Blende sowie die entsprechende kurze Verschlusszeit bedingen die hohe Lichtempfindlichkeit von mindestens ISO 20.000.

Ferner betrifft die Erfindung ein Fahrzeug mit einer erfindungsgemäßen Vorrichtung zum Ermitteln von Daten für ein Straßenzugpanoramabild, wie zuvor beschrieben.

Abschließend betrifft die Erfindung ein Verfahren zum Ermitteln von Daten für ein Straßenzugpanoramabild mit einem Fahrzeug, wobei die erfindungsgemäße Vorrichtung in das Fahrzeug eingebaut wird, das Fahrzeug im Straßenverkehr bewegt wird und mittels der Vorrichtung ein kontinuierlicher Film während des Bewegens des Fahrzeuges im Straßenverkehr erstellt wird.

Basierend auf diesen Filmdaten kann dann nachgeschaltet ein Straßenzugpanoramabild erzeugt werden.

Ein Film besteht bekanntermaßen lediglich aus vielen nacheinander aufgenommenen Einzelbildern. Durch die Auswahl der Kamera und der Positionierung der Kamera können Bereiche dieser Einzelbilder dann entsprechend zusammengesetzt werden, so dass ein Straßenzugpanoramabild entsteht, welches kaum optische Verzerrungen aufweist und für eine weitere Auswertung, beispielsweise zum Erstellen von statischen Parkplatzdaten verwendet werden kann.

Die Erfindung wird nachfolgend anhand eines schematischen Ausführungsbeispieles unter Bezugnahme auf die Figuren näher erläutert. Hierbei zeigen:
- Fig. 1: eine Seitenansicht auf ein Fahrzeug mit einer erfindungsgemäßen Vorrichtung;
- Fig. 2: eine Frontansicht auf ein Fahrzeug mit einer erfindungsgemäßen Vorrichtung;
- Fig. 3: eine Aufsicht auf ein Fahrzeug mit einer erfindungsgemäßen Vorrichtung;
- Fig. 4: eine schematische Darstellung einer Befestigungseinrichtung einer erfindungsgemäßen Vorrichtung; und
- Fig. 5: ein stark vereinfachtes Straßenzugpanoramabild.

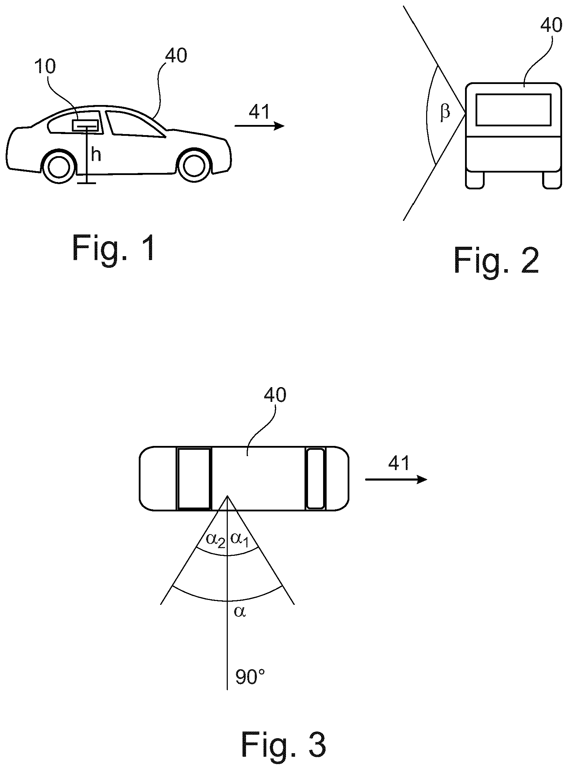

Im Folgenden wird unter Bezugnahme auf die Figuren 1, 2 und 3 die Ausrichtung einer erfindungsgemäßen Vorrichtung 10 mit einer Kamera 20 in einem Fahrzeug 40 näher erläutert.

Hierbei ist in Fig. 1 das Fahrzeug 40 in einer Seitenansicht, in Fig. 2 in einer Ansicht von vorne und in Fig. 3 in einer Ansicht von oben dargestellt.

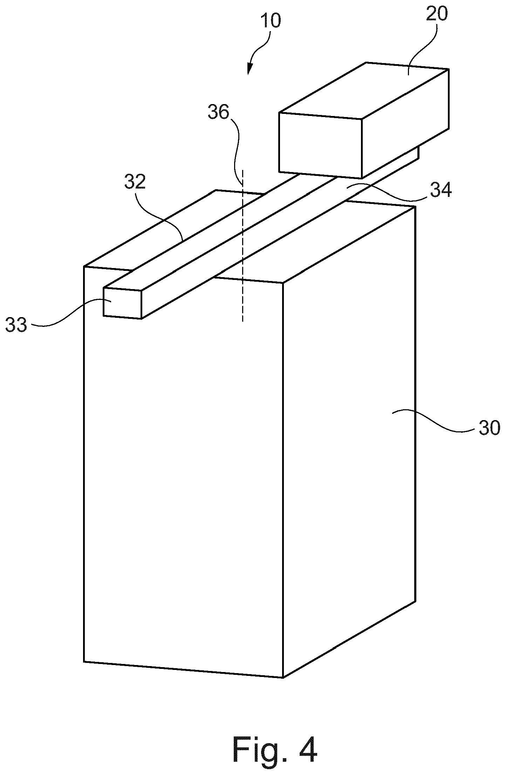

Die erfindungsgemäße Vorrichtung 10 mit einer Kamera 20 wird mittels einer Befestigungseinrichtung 30, welche in Fig. 4 dargestellt ist, in dem Fahrzeug 40 fest fixiert. Dies bedeutet, dass sie möglichst robust und sicher im Fahrzeug 40 angebracht ist.

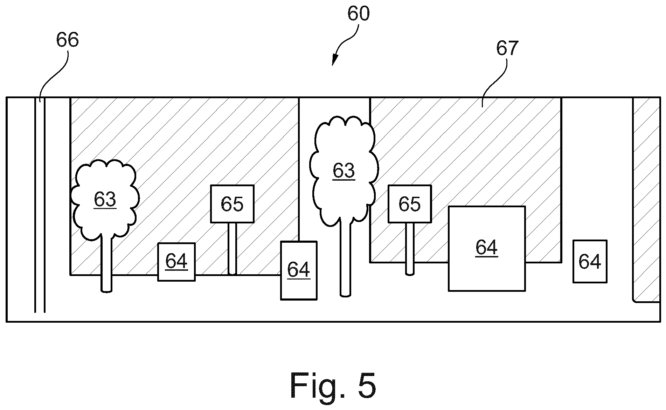

Mit der Kamera 20 wird während einer Fahrt mit dem Fahrzeug 40 ein kontinuierlicher Film, bevorzugt mindestens im 4K UHD-Standard, das heißt mit mindestens 3.840 Pixeln auf 2.160 Pixeln und 24 Bildern pro Minute aufgezeichnet. Ziel ist es, basierend auf diesem Film ein möglichst realistisches und unverzerrtes Straßenzugpanoramabild 60, wie in Fig. 5 gezeigt, zu erzeugen.

Dieses Straßenzugpanoramabild 60 kann verwendet werden, um statische Daten für ein Parkplatzmanagement zu ermitteln. Hierfür ist es notwendig, auf dem Straßenzugpanoramabild 60 zum einen den Straßenrand zu erfassen und zum anderen auch relativ nah an dem Straßenrand befindliche Schilder, auf denen Informationen zu Parkzeiten oder dergleichen stehen können.

Daher wird die Kamera 20 mittels der Befestigungseinrichtung 30 zum einen möglichst nah am Fenster des Fahrzeuges 40 platziert. Die Kamera wird bevorzugt in einer Höhe h von ca. 1,2 Meter, bevorzugt in Höhe von 1,21 Meter, angeordnet.

Die Kamera kann ein Weitwinkelobjektiv aufweisen. Diese kann beispielsweise eine Brennweite von 20 mm haben.

Wie aus den Figuren 2 und 3 ersichtlich, ist die Kamera im Hochformat angeordnet. Dies bedeutet, dass der Kamerawinkel β, welcher den vertikalen Erfassungswinkel darstellt, größer ist als der Kamerawinkel α, der den horizontalen Erfassungswinkel angibt.

Entsprechend der Erfindung wird ein Weitwinkelobjektiv gewählt, welches beispielsweise einen vertikalen Erfassungswinkel um mindestens 100°, bevorzugt 107° und einen horizontalen Erfassungswinkel von über 55°, bevorzugt 62° aufweist.

Die Kamera 20 wird in dem Fahrzeug 40 so angeordnet, dass sich der vertikale Erfassungswinkel β im Wesentlichen gleich verteilt. Dies bedeutet, dass sich der gleiche Teil des Erfassungswinkels β in einem Bereich über 90°, das heißt einer Parallele zur Straßenfläche und unter 90° befindet.

Dem gegenüber wird entsprechend der Erfindung die Kamera 20 für den horizontalen Erfassungswinkel α anders ausgerichtet. Es ist wesentlich, dass der Bereich von 90° zur Fahrtrichtung 41 im Erfassungswinkel α beinhaltet ist. Um das Erstellen des Straßenzugpanoramabildes 60 zu vereinfachen, wird die Kamera 20 im Fahrzeug 40 so angeordnet, dass ein Großteil des Erfassungswinkels α in Fahrtrichtung nach vorne zeigend angeordnet ist. Beispielsweise kann der Erfassungswinkel α₁, welcher den Bereich von der 90°-Linie nach vorne in Fahrtrichtung beschreibt, 40°, bevorzugt über 45°, sein. Dem entsprechend ist der Erfassungsbereich α₂, welcher den entgegen der Fahrrichtung ausgerichteten Erfassungsbereich des Winkels α betrifft, bei einem gesamten Erfassungsbereich α von 62° im Bereich von 17°.

Eine derartige Anordnung ist vorteilhaft, da sich das Fahrzeug, wie bereits beschrieben, in die Fahrtrichtung 41 bewegt und so die Kamera 20 nach vorne schauend ausgerichtet ist was es auch ermöglicht beispielsweise Verkehrsschilder zu erfassen die quer zur Straße ausgerichtet sind.

Als Kamera 20 wird bevorzugt eine Kamera eingesetzt, welche eine hohe Lichtempfindlichkeit, beispielsweise im Bereich von ISO 51200 und eine Verschlusszeit von 1:4.000 Sekunden und eine Blende von 5,6 hat. Ziel ist es hierbei, während der Aufnahme einen Bereich von möglichst nah am Fahrzeug 40, beispielsweise ab 1,25 Metern bis ins Unendliche, möglichst scharf aufzunehmen, damit diese Daten anschließend als statische Daten für ein Parkplatzmanagementsystem ausgewertet werden können.

In Fig. 4 ist eine stark schematische Darstellung einer Befestigungseinrichtung 30 gezeigt. Wesentlich an der Befestigungseinrichtung 30 ist, dass sie möglichst fest fixiert im Fahrzeug 40 anbringbar ist. Hierfür kann sie beispielsweise die Kontur der Rückbank nachbilden.

Um ausreichende Daten für statische Daten eines Parkraumanagements zu ermitteln ist es nötig, sowohl auf der rechten als auch auf der linken Seite aus einem Fahrzeug 40 zu filmen. Hierzu weist die Befestigungseinrichtung 30 einen Kameraarm 32 auf. Dieser ist wiederum an der Befestigungseinrichtung 30 derart befestigt, dass er um seine Achse 36 geschwenkt beziehungsweise leicht gedreht werden kann. Dies ist notwendig, damit eine Kamera 20 derartig auf einem Ende 33, 34 des Kameraarms 32 angeordnet werden kann, dass sie den zuvor beschriebenen Erfassungswinkel in der Horizontalen α aufweist, der nach vorne gerichtet ist.

Wird beispielsweise zuerst die linke Seite einer Straße mittels der Kamera 20 gefilmt, befindet sich die Befestigungseinrichtung 30 zuerst auf der linken Seite des Fahrzeugs 40. Anschließend kann sie auf die rechte Seite des Fahrzeuges 40 versetzt werden und die Kamera an das andere Ende 33 des Kameraarms 32 montiert werden. Nun ist ein Filmen aus dem linken Fenster des Fahrzeuges 40 möglich.

Abschließend wird in Fig. 5 ein stark schematisiertes Beispiel für ein erzeugtes Straßenzugpanorama 60 dargestellt. Bei einer Aufbereitung der Daten werden die mittels der Kamera 20 erzeugten kontinuierlichen Filmdaten aufbereitet und zu einem Straßenzugpanoramabild 60, welches möglichst keine oder kaum optische Verzerrungen aufweist, zusammengesetzt. Auf dem Straßenzugpanoramabild 60 können dann einzelne Objekte 64 wie Autos oder Lkws, die sich auf Parkplätzen befinden, aber auch Schilder 65 erkannt werden. Auf diesen Schildern 65 können beispielsweise Parkinformationen vorhanden sein. Auch werden beispielsweise komplette beziehungsweise Ausschnitte von Laternen 66 dargestellt. Wesentlich hierbei ist es, dass der Straßenrand vorhanden ist, um ausreichend Daten für statische Informationen für das Parkmanagementsystem zu ermitteln. Bei den in Fig. 5 schraffiert dargestellten Objekten handelt es sich beispielsweise um im Hintergrund befindliche Häuser 67.

Mit der erfindungsgemäßen Vorrichtung und dem erfindungsgemäßen Verfahren ist es so möglich, ein Straßenzugpanoramabild zu erstellen, welches die Basis für statische Daten in einem Parkmanagementsystem darstellt.

## Patentansprüche

1. Vorrichtung (10) zum Ermitteln von Daten für ein Straßenzugpanoramabild (60)
mit einer Kamera (20),
mit einer Befestigungseinrichtung (30) zum Anbringen der Kamera (20) in oder an einem Fahrzeug (40),
wobei die Kamera (20) an der Befestigungseinrichtung (30) fixiert ist, und
mittels der Befestigungseinrichtung (30) im oder am Fahrzeug (40) positionierbar ist, um zumindest Bilddaten in einem 90°-Winkel zu einer Bewegungsrichtung (41) des Fahrzeuges (40) aufzunehmen, wenn das Fahrzeug in Bewegung ist,
wobei die Befestigungseinrichtung (30) fest mit dem Fahrzeug (40) verbindbar ist,
**dadurch gekennzeichnet,**
**dass** die Kamera (20) ausgebildet ist, einen kontinuierlichen Film mit einer Auflösung von mehr als 1.920 Pixel auf 1.080 Pixel pro Frame aufzunehmen,
**dass** die Kamera und die Befestigungseinrichtung (30) im fixierten Zustand der Kamera (20) an der Befestigungseinrichtung (30) zum Erstellen des kontinuierlichen Films im Hochformat ausgebildet sind
**dass** die Kamera (20) und die Befestigungseinrichtung (30) im fixierten Zustand der Kamera (20) ausgebildet sind, zur Aufnahme des kontinuierlichen Films mit einem Erfassungswinkel von mindestens 90° in der Vertikalen (β) und/oder mindestens 50° in der Horizontalen (α) zu haben,
**dass** die Kamera (20) und die Befestigungseinrichtung (30) im fixierten Zustand der Kamera (20) an der Befestigungseinrichtung (30) zur Aufnahme des kontinuierlichen Films mit einem Erfassungswinkel (α₁) von mindestens 45° horizontal in Fahrtrichtung des Fahrzeuges (40) und einen Erfassungswinkel (α₂) mindestens 5° horizontal gegen die Bewegungsrichtung (41) des Fahrzeuges ausgelegt sind, wobei ein Großteil des Erfassungswinkels α in Fahrtrichtung nach vorne zeigend angeordnet ist, so dass die Kamera (20) nach vorne schauend ausgerichtet ist.

2. Vorrichtung (10) nach Anspruch 1,
**dadurch gekennzeichnet,**
**dass** die Befestigungseinrichtung (30) im Innenraum des Fahrzeuges (20) vorgesehen ist, und
**dass** die Befestigungseinrichtung (30) zumindest mittels einer Isofixbefestigung und/oder einer Kopfstütze auf dem Sitz des Fahrzeuges (40) befestigbar ist.

3. Vorrichtung (10) nach Anspruch 1 oder 2,
**dadurch gekennzeichnet,**
**dass** die Befestigungseinrichtung (30) einen Kameraarm (32) aufweist, an dem die Kamera (20) fixiert ist, und
**dass** der Kameraarm (32) in der Horizontalen schwenkbar ausgebildet ist.

4. Vorrichtung (10) nach Anspruch 3,
**dadurch gekennzeichnet,**
**dass** der Kameraarm (32) wippenartig mit zwei an entfernt liegenden Enden (33, 34) ausgebildeten Befestigungspunkten für die Kamera (20) ausgeführt ist.

5. Vorrichtung (10) nach einem der Ansprüche 1 bis 4,
**dadurch gekennzeichnet,**
**dass** die Kamera (20) im fixierten Zustand an der Befestigungseinrichtung (30) eine Höhe über einem Straßenniveau zwischen 0,8 m und 1,8 m, insbesondere zwischen 1,0m und 1,5m bevorzugt um 1,2 m, aufweist, wobei die Befestigungseinrichtung im oder am Fahrzeug (40) angebracht ist.

6. Vorrichtung (10) nach einem der Ansprüche 1 bis 5,
**dadurch gekennzeichnet,**
**dass** die Kamera (20) mindestens mit einer Verschlusszeit von 1/3.000 Sekunden betreibbar ist.

7. Vorrichtung (10) nach einem der Ansprüche 1 bis 6,
**dadurch gekennzeichnet,**
**dass** die Kamera (20) eine Lichtempfindlichkeit von mindestens ISO 20.000 aufweist.

8. Vorrichtung (10) nach einem der Ansprüche 1 bis 7,
**dadurch gekennzeichnet,**
**dass** die Kamera (20) mindestens mit einer Blende von 4 betreibbar ist.

9. Vorrichtung (10) nach einem der Ansprüche 1 bis 8,
**dadurch gekennzeichnet,**
**dass** die Kamera (20) betreibbar ist, im Bereich von mindestens 2 m Entfernung bis Unendlich scharf aufzunehmen.

10. Fahrzeug (40),
**gekennzeichnet durch**
eine Vorrichtung (10) zum Ermitteln von Daten für ein Straßenzugpanoramabild (60) nach einem der Ansprüche 1 bis 9.

11. Verfahren zum Ermitteln von Daten für ein Straßenzugpanoramabild mit einem Fahrzeug,
**dadurch gekennzeichnet,**
**dass** eine Vorrichtung (10) nach einem der Ansprüche 1 bis 9 in das Fahrzeug (40) eingebaut wird,
**dass** das Fahrzeug (40) im Straßenverkehr bewegt wird, und
**dass** mittels der Vorrichtung (10) ein kontinuierlicher Film während des Bewegens des Fahrzeugs (40) im Straßenverkehr erstellt wird.

## Claims

1. Apparatus (10) for ascertaining data for a panoramic image of a street (60)
with a camera (20),
with a fastening device (30) to attach the camera (20) in or on a vehicle (40),
wherein the camera (20) is fixed on the fastening device (30) and
can be positioned in or on the vehicle (40) by means of the fastening device (30), in order to record at least image data at an angle of 90° to a direction of movement (41) of the vehicle (40) when the vehicle is in motion,
wherein the fastening device (30) can be firmly connected to the vehicle (40),
**characterized in that**
the camera (20) is designed to record a continuous film with a resolution of more than 1,920 pixels by 1,080 pixels per frame,
**in that** in the fixed state of the camera (20) on the fastening device (30) the camera and the fastening device (30) are designed to produce the continuous film in an upright format,
**in that** in the fixed state of the camera (20) the camera (20) and the fastening device (30) are designed to record the continuous film with a capture angle of at least 90° in the vertical (β) and / or at least 50° in the horizontal (α) to have,
that in the fixed state of the camera (20) on the fastening device (30) the camera (20) and the fastening device (30) are designed for recording the continuous film with a capture angle (α₁) of at least 45° horizontally in the direction of travel of the vehicle (40) and a capture angle (α₂) at least 5° horizontally in a direction opposed to the direction of movement (41) of the vehicle, with a large part of the capture angle α being arranged in the direction of travel pointing forward, so that the camera (20) is aligned forward looking.

2. Apparatus (10) according to claim 1,
**characterized in that**
the fastening device (30) is provided in the interior of the vehicle (20) and
**in that** the fastening device (30) can be fastened at least by means of an Isofix fastening and/or a headrest on the seat of the vehicle (40).

3. Apparatus (10) according to claim 1,
**characterized in that**
the fastening device (30) has a camera arm (32), on which the camera (20) is fixed, and
**in that** the camera arm (32) is designed to be pivotable in the horizontal.

4. Apparatus (10) according to claim 3,
**characterized in that**
the camera arm (32) is of rocker-like design with two fastening points for the camera (20) that are designed at remote ends (33, 34).

5. Apparatus (10) according to anyone of claims 1 to 4,
**characterized in that**
in the fixed state on the fastening device (30) the camera (20) has a height above a street level ranging between 0.8 m and 1.8 m, in particular between 1.0 m and 1.5 m, by preference around 1.2 m, wherein the fastening device is attached in or on the vehicle (40).

6. Apparatus (10) according to anyone of claims 1 to 5,
**characterized in that**
the camera (20) can be operated at least with a shutter speed of 1/3,000 seconds.

7. Apparatus (10) according to anyone of claims 1 to 6,
**characterized in that**
the camera (20) has a light sensitivity of at least ISO 20,000.

8. Apparatus (10) according to anyone of claims 1 to 7,
**characterized in that**
the camera (20) can be operated at least with an aperture of 4.

9. Apparatus (10) according to anyone of claims 1 to 8,
**characterized in that**
the camera (20) can be operated to record in focus in the range of a distance of at least 2 m to infinity.

10. Vehicle (40),
**characterized by**
an apparatus (10) for ascertaining data for a panoramic image of a street according to anyone of claims 1 to 9.

11. Method for ascertaining data for a panoramic image of a street with a vehicle,
**characterized in that**
an apparatus (10) according to anyone of claims 1 to 9 is installed in the vehicle (40),
the vehicle (40) is moved in road traffic, and
**in that** by means of the apparatus (10) a continuous film is produced during movement of the vehicle (40) in road traffic.

## Revendications

1. Dispositif (10) de détermination de données pour une image panoramique de rue (60),
comprenant une caméra (20),
comprenant un organe de fixation (30) pour monter la caméra (20) dans ou sur un véhicule (40),
la caméra (20) étant fixée sur l'organe de fixation (30) et pouvant être positionnée dans ou sur le véhicule (40) au moyen de l'organe de fixation (30) afin d'enregistrer au moins des données d'image à un angle de 90° par rapport à une direction de déplacement (41) du véhicule (40), lorsque le véhicule est en mouvement,
l'organe de fixation (30) pouvant être relié solidairement au véhicule (40),
**caractérisé en ce que**
la caméra (20) est conçue pour enregistrer un film continu avec une résolution supérieure à 1 920 pixels sur 1 080 pixels par trame,
**en ce que** la caméra et l'organe de fixation (30) sont conçus pour, à l'état fixé de la caméra (20) sur l'organe de fixation (30), créer le film continu en format vertical,
**en ce que** la caméra (20) et l'organe de fixation (30) sont conçus pour, à l'état fixé de la caméra (20), enregistrer le film continu avec un angle de détection d'au moins 90° dans la verticale (β) et/ou d'au moins 50° dans l'horizontale (a),
**en ce que** la caméra (20) et l'organe de fixation (30) sont conçus pour, à l'état fixé de la caméra (20) sur l'organe de fixation (30), enregistrer le film continu avec un angle de détection (α₁) d'au moins 45° horizontalement dans la direction de déplacement du véhicule (40) et avec un angle de détection (α₂) d'au moins 5° horizontalement en sens opposé à la direction de déplacement (41) du véhicule,
une grande partie de l'angle de détection α étant orientée vers l'avant dans la direction de déplacement, de sorte que la caméra (20) est orientée de manière à regarder vers l'avant.

2. Dispositif (10) selon la revendication 1,
**caractérisé en ce que**
l'organe de fixation (30) est prévu dans l'habitacle du véhicule (20), et
**en ce que** l'organe de fixation (30) peut être fixé sur le siège du véhicule (40) au moins au moyen d'une fixation Isofix et/ou d'un appui-tête.

3. Dispositif (10) selon la revendication 1 ou 2,
**caractérisé en ce que**
l'organe de fixation (30) comprend un bras à caméra (32) sur lequel est fixée la caméra (20), et
**en ce que** le bras à caméra (32) est conçu de manière à pouvoir pivoter à l'horizontale.

4. Dispositif (10) selon la revendication 3,
**caractérisé en ce que**
**en ce que** le bras à caméra (32) est réalisé en forme de bascule avec deux points de fixation pour la caméra (20), formés à des extrémités (33, 34) éloignées l'une de l'autre.

5. Dispositif (10) selon l'une des revendications 1 à 4,
**caractérisé en ce que**
la caméra (20), à l'état fixé sur l'organe de fixation (30), présente une hauteur au-dessus d'un niveau de la rue comprise entre 0,8 m et 1,8 m, en particulier entre 1,0 m et 1,5 m, de préférence égale à environ 1,2 m, l'organe de fixation étant monté dans ou sur le véhicule (40).

6. Dispositif (10) selon l'une des revendications 1 à 5,
**caractérisé en ce que**
la caméra (20) peut fonctionner au moins avec une vitesse d'obturation de 1/3 000 de seconde.

7. Dispositif (10) selon l'une des revendications 1 à 6,
**caractérisé en ce que**
la caméra (20) présente une sensibilité à la lumière d'au moins ISO 20 000.

8. Dispositif (10) selon l'une des revendications 1 à 7,
**caractérisé en ce que**
la caméra (20) peut fonctionner avec une ouverture d'au moins 4.

9. Dispositif (10) selon l'une des revendications 1 à 8,
**caractérisé en ce que**
la caméra (20) peut fonctionner pour prendre des photos nettes dans une plage allant d'une distance d'au moins 2 m à l'infini.

10. Véhicule (40),
**caractérisé par**
un dispositif (10) de détermination de données pour une image panoramique de rue (60) selon l'une des revendications 1 à 9.

11. Procédé de détermination de données pour une image panoramique de rue avec un véhicule,
**caractérisé en ce que**
un dispositif (10) selon l'une des revendications 1 à 9 est monté dans le véhicule (40),
**en ce que** le véhicule (40) est déplacé dans la circulation routière, et
**en ce qu'**un film continu est créé au moyen du dispositif (10) pendant le déplacement du véhicule (40) dans la circulation routière.
